# EUROPÄISCHE PATENTSCHRIFT

(11) **EP 3 437 261 B1**
(45) Veröffentlichungstag und Bekanntmachung des Hinweises auf die Patenterteilung: **18.05.2022**
(21) Anmeldenummer: 17703359.4
(22) Anmeldetag: 31.01.2017
(51) Int. Cl.: H04L 12/40, H04L 29/06

(54) **VORRICHTUNG UND VERFAHREN ZUR FILTERUNG VON SICHERHEITSRELEVANTEN EINGRIFFEN, SOWIE EIN GATEWAY-STEUERGERÄT**
DEVICE AND METHOD FOR FILTERING SAFETY-RELEVANT INTERVENTIONS, AND GATEWAY CONTROL DEVICE
DISPOSITIF ET PROCÉDÉ DE FILTRAGE D'INTERVENTIONS RELATIVES À LA SÉCURITÉ, ET DISPOSITIF DE COMMANDE DE PASSERELLE

(30) Priorität: 29.03.2016 DE 102016205138
(43) Veröffentlichungstag der Anmeldung: 06.02.2019
(73) Patentinhaber: Robert Bosch GmbH, 70442 Stuttgart (DE)
(72) Erfinder: RITTER, Claus, 76337 Waldbronn (DE); HEYL, Andreas, Palo Alto, California 943041223 (US); REICHARDT, Herbert, 73773 Aichwald (DE); DOEHREN, Stefan, 73630 Remshalden-Grunbach (DE)
(86) Internationale Anmeldenummer: PCT/EP2017/052012
(87) Internationale Veröffentlichungsnummer: WO 2017/167470

(56) Entgegenhaltungen:
- US-A1- 2014 032 800
- US-A1- 2015 020 152

## Beschreibung

### Stand der Technik

Vorrichtung und Verfahren zur Filterung von sicherheitsrelevanten Eingriffen, sowie ein Gateway-Steuergerät nach dem Oberbegriff der unabhängigen Ansprüche 1, 7 und 8.

Ein Verfahren zum Durchführen von sicherheitskritischen Vorgängen in einem Steuergerät und ein solches Steuergerät sind aus der DE 101 48 325 A1 bekannt. Ein Hardware-Sicherheitsmodul in dem Steuergerät erhält über einen ersten Anschluss eine Eingabe, wobei auf Grundlage der Eingabe die Durchführung eines Vorgangs freigegeben wird.

In dem Dokument US 2015/0020152 A1 ist ein Sicherheitssystem gezeigt, welches zum Schutz einer Fahrzeugelektronik durch gezieltes Eingreifen in den Kommunikationspfad dient. Es wird verhindert, dass bösartige Nachrichten an sicherheitskritischen Steuergeräten eintreffen.

### Offenbarung der Erfindung

### Vorteile der Erfindung

Die erfindungsgemäße Vorrichtung, das Verfahren, sowie das Gateway-Steuergerät zur Filterung von sicherheitsrelevanten Eingriffen mit den Merkmalen gemäß der unabhängigen Ansprüche hat den Vorteil, dass durch den Empfang des Parameters durch die dritte Kommunikationseinheit ein Kommunikationsweg für den sicherheitsrelevanten Parameter geschaffen wird, der von den Kommunikationswegen der herkömmlichen Daten verschieden ist. Durch diesen weiteren Kommunikationsweg, kann beispielsweise eine Remote-Freigabe für Software durch den Fahrzeughersteller erfolgen, während die neue Software nur durch eine kabelgebundene Verbindung auf das Fahrzeug geladen werden kann.

Außerdem besteht die Möglichkeit die unterschiedlichen Kommunikationseinheiten mit unterschiedlicher Sicherheitssoftware auszustatten.

Durch die Filterung des Datentransfers abhängig vom Parameter durch die Steuereinheit bevor sie auf das Bussystem gelangen, wird die Fehleranfälligkeit des Fahrzeuges durch ungewollte Daten, die durch Dritte auf das Fahrzeug gesendet werden, reduziert.

Durch die Vernetzung von Fahrzeugen wird es in Zukunft möglich sein, dass Zugriffe auf Fahrerassistenzsysteme oder deren Schnittstellen und Zugriffe auf Diagnosefunktionen auch bei Fahrzeugen, die sich bereits beim Nutzer befinden, also im Feld sind, möglich sind.

Ein Zugriff durch eine externe Recheneinheit, wie z.B. ein remote-Zugriff einer durch einen Entwickler selbst programmierten App oder das remote-Nachrüsten von Firmware-Updates kann durch die Erfindung unter sicherheitsbezogenen Aspekten leichter durchgeführt werden. Hierbei kann auch bei Fahrzeugen, die bereits im Feld sind, durch den Fahrzeughersteller über die dritte Kommunikationseinheit im Nachhinein ein erweiterter Zugriff ermöglicht werden, ohne dass dies dem Fahrer des Fahrzeuges bewusst wird.

Ein remote-Zugriff, der theoretisch den Zugriff auf alle Steuergeräte ermöglichen würde, kann zu einer ungewollten Ansteuerung von Steuergeräten und Aktuatoren führen, welche eventuell für das Fahrzeug sicherheitsrelevant sind. Durch die Möglichkeit einer Filterung des Datentransfers über einen durch die dritte Kommunikationseinheit empfangenen Parameter, kann bereits in der erfindungsgemäßen Vorrichtung und im erfindungsgemäßen Verfahren oder im erfindungsgemäßen Gateway-Steuergerät sichergestellt werden, dass nur Zugriffe erlaubt werden, die zu keiner ungewollten Ansteuerung von Steuergeräten oder Aktuatoren im Fahrzeug führen.

In den abhängigen Ansprüchen sind vorteilhafte Ausgestaltungen und Weiterbildungen der erfindungsgemäßen Vorrichtung und des erfindungsgemäßen Verfahrens angegeben.

Der Datentransfer kann auf vorteilhafte Weise abhängig vom empfangenen Parameter vollständig unterbrochen werden oder Daten teilweise gefiltert werden. Diese Form der Filterung ermöglicht eine maximale Flexibilität für unterschiedliche Zugriffe auf das Bussystem, und die Steuergeräte des Fahrzeugs. Vorteilhaft ist eine für einen kabellosen Datenaustausch, insbesondere über W-LAN, drahtlose Mobilfunktechnologie oder Bluetooth, ausgebildete zweite Kommunikationseinheit, da diese Form des Datenaustausches in Zukunft immer öfters genutzt wird und somit beispielsweise Fahrzeuge auch bei einem Software-Update nicht unbedingt in die Werkstatt gebracht werden müssen.

Es ist von Vorteil, wenn die dritte Kommunikationseinheit für einen kabellosen Datenaustausch, insbesondere über W-LAN, drahtlose Mobilfunktechnologie oder Bluetooth, ausgebildet ist, da diese Form des Datenaustausches in Zukunft immer öfters genutzt wird. Der Fahrzeughersteller kann auch wenn sich das Fahrzeug schon im Feld befindet im Nachhinein bestimmte Zugriffe auf das Bussystem des Fahrzeuges erlauben.

Alternativ ist es von Vorteil, wenn die dritte Kommunikationseinheit für einen kabelgebundenen Datenaustausch mit einem Eingabegerät, welches innerhalb des Fahrzeuges angeordnet ist, ausgebildet ist, da die Eingabe des Parameters nur über das im Fahrzeug vorhandene Eingabegerät erfolgen kann. Dies erhöht die Sicherheit, da ein Zugriff auf die dritte Kommunikationseinheit durch unerwünschte externe Angreifer nicht über die kabellose Verbindung möglich ist.

Es ist von großem Vorteil, wenn die Vorrichtung ein eigenständiges Bauteil ist, welches an die OBD-Buchse des Fahrzeuges anschließbar ist, da auf diese Weise jedes Fahrzeug, mit der Vorrichtung zur Filterung des Datentransfers nachgerüstet werden können.

### Ausführungsbeispiele

Bevorzugte Ausführungsbeispiele der Erfindung sind in der Zeichnung dargestellt und in der nachfolgenden Beschreibung näher erläutert.

Es zeigen:
Figur 1 eine schematische Darstellung einer erfindungsgemäßen Vorrichtung,
Figur 2 eine schematische Darstellung einer erfindungsgemäßen Vorrichtung gemäß einem ersten Ausführungsbeispiel,
Figur 3 eine schematische Darstellung einer erfindungsgemäßen Vorrichtung gemäß einem zweiten Ausführungsbeispiel und
Figur 4 ein Ablaufdiagram eines erfindungsgemäßen Verfahrens.

### Ausführungsformen der Erfindung

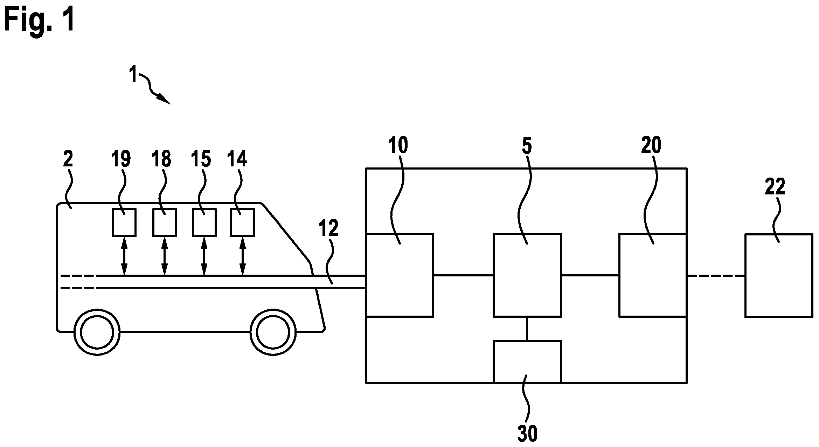

Die Figur 1 zeigt eine Vorrichtung 1 zur Filterung von sicherheitsrelevanten Eingriffen mit einer Steuereinheit 5, einer ersten Kommunikationseinheit 10, einer zweiten Kommunikationseinheit 20 und einer dritten Kommunikationseinheit 30. Die erste Kommunikationseinheit 10 kann Daten mit mindestens einem Bussystem 12 eines Fahrzeuges 2 austauschen. Die zweite Kommunikationseinheit 20 kann Daten mit einer externen Recheneinheit 22 austauschen. Die dritte Kommunikationseinheit 30 ist von der ersten Kommunikationseinheit 10 und der zweiten Kommunikationseinheit 20 verschieden.

Das Bussystem 12 befindet sich innerhalb des Fahrzeuges 2 und ist mit mehreren Steuergeräten 14, 15, 18, 19 verbunden. Die Steuergeräte 14, 15, 18, 19 können Daten vom Bussystem 12 empfangen und Daten an das Bussystem 12 senden. Die Steuergeräte 14, 15, 18, 19 können Fahrerassistenzsysteme ansteuern, wobei sie über Fahrzeugsensoren die Umgebung wahrnehmen und Aktuatoren ansteuern, z.B. den Kurvenassistenten, den Einparkassistenten oder das Adaptive Cruise System. Über Diagnoseprotokolle oder Diagnosefunktionen, welche über das Bussystem 12 an die Steuergeräte 14, 15, 18, 19 gesendet werden, kann eine Diagnose einzelner oder mehrerer Fahrzeugkomponenten durchgeführt werden.

Mit Hilfe der Daten, die auf das Bussystem 12 gesendet werden, können die Steuergeräte 14, 15, 18, 19 untereinander oder mit Geräten, die an das Bussystem 12 angeschlossen sind, kommunizieren. Die Daten weisen vereinfacht folgende Merkmale auf: Adressen, Kommandos und Werte.

Durch die Adresse wird ein bestimmtes oder mehrere Steuergeräte 14, 15, 18, 19 des Bussystems 12 angesprochen. Die Adresse kann beispielsweise nur ein bestimmtes Steuergerät 14, mehrere Steuergeräte 14, 15, oder alle Steuergeräte 14, 15, 18, 19 eines spezifischen Bussystems 12 ansprechen. Die Kommandos beinhalten Befehle, die an das Steuergerät 14, 15, 18, 19 gesendet werden, z.B. das Überschreiben von Funktionen, oder das Auslesen von Daten oder Diagnosewerten. Die Kommandos sind meist mit Werten gekoppelt und geben z.B. einen neuen Wert für den Lenkwinkel oder (Abstands-)Werte für den Einparkassistenten an. Es können auch durch Diagnose- oder Lesekommandos Werte aus einem Steuergerät 14, 15, 18, 19 ausgelesen werden und über das Bussystem 12 an ein Diagnosegerät gesendet werden.

Die Steuereinheit 5 filtert den Datentransfer zwischen der ersten Kommunikationseinheit 10 und der zweiten Kommunikationseinheit 20 abhängig von einem durch eine dritte Kommunikationseinheit 30 empfangenen Parameter.

Der durch die dritte Kommunikationseinheit 30 empfangene Parameter dient der Steuereinheit 5 zur Verifizierung, ob ein Zugriff auf das Bussystem 12 erlaubt ist bzw. ob sich der Anwender als berechtigte Person authentifizieren kann.

Der Datentransfer wird abhängig vom empfangenen Parameter vollständig unterbrochen oder die Daten werden teilweise gefiltert. Erfolgt eine teilweise Filterung, kann abhängig vom eingegebenen Parameter eine Filterung der Adressen, von Kommandos und/oder von Werten erfolgen. Hierbei ist auch eine Kombination der Adressen, von Kommandos und/oder von Werten möglich.

Beispielsweise kann ein besonders hoch autorisierter Benutzer einen speziellen Parameter A eingeben, der eine Freischaltung aller Daten erlaubt, während ein anderer Benutzer einen anderen Parameter B eingibt, der nur einen Lesezugriff auf wenige Steuergeräte ermöglicht.

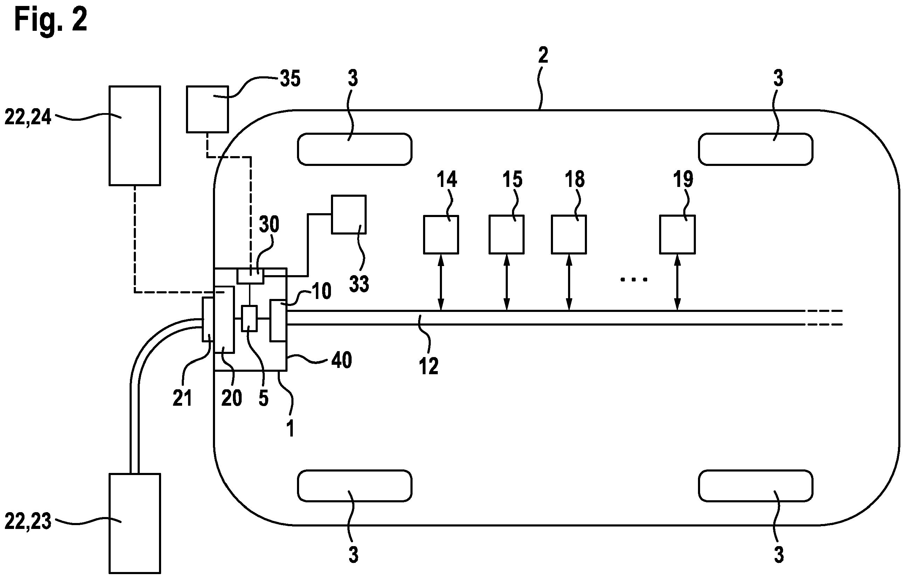

Figur 2 zeigt eine Vorrichtung 1 zur Filterung des Datentransfers gemäß einem zweiten Ausführungsbeispiels, welche in ein Fahrzeuges 2 integriert ist. Das Fahrzeug 2 weist Räder 3 auf. Die Vorrichtung 1 ist über die erste Kommunikationseinheit 10 mit dem Bussystem 12 verbunden. Das Bussystem 12 weist mehrere Steuergeräte 14, 15, 18, 19 auf. Die erste Kommunikationseinheit 10 kann mit dem mindestens einen Bussystem 12 Daten austauschen.

Die Vorrichtung 1 weist eine zweite Kommunikationseinheit 20 auf, welche mit einer externen Recheneinheit 22 Daten austauschen kann. Die zweite Kommunikationseinheit 20 kann über eine kabelgebundene Verbindung mit der Recheneinheit 22 verbunden sein. Dies kann beispielsweise ein Diagnosegerät 23 in einer Werkstatt sein, welches an eine OBD-Schnittstelle 21 des Fahrzeuges 2 angeschlossen wird.

Die zweite Kommunikationseinheit 20 kann aber auch für einen kabellosen Datenaustausch ausgebildet sein. In diesem Fall erfolgt der Datenaustausch beispielsweise über W-LAN, drahtlose Mobilfunktechnologie oder Bluetooth mit der externen Recheneinheit 22, welche beispielsweise ein Handy 24 oder ein Tablet-PC 24 sein kann.

Die Vorrichtung 1 weist eine dritte Kommunikationseinheit 30 auf, welche von der ersten Kommunikationseinheit 10 und der zweiten Kommunikationseinheit 20 verschieden ist.

Die dritte Kommunikationseinheit 30 ist für einen kabellosen Datenaustausch, insbesondere über W-LAN, drahtlose Mobilfunktechnologie oder Bluetooth, ausgebildet. Eine Sendeeinheit 35, welche auch zum kabellosen Datenaustausch ausgebildet ist, kann auf diese Weise einen Parameter an die dritte Kommunikationseinheit 30 senden. Hierbei können beliebige Verschlüsselungsmethoden zum Einsatz kommen, auf die jedoch im Rahmen dieser Erfindung nicht eingegangen wird.

In einer alternativen Ausführungsform kann die dritte Kommunikationseinheit 30 für einen kabelgebundenen Datenaustausch mit einem Eingabegerät 33 ausgebildet sein. Das Eingabegerät 33 ist dabei innerhalb des Fahrzeuges 2 angeordnet, so dass ein Fahrer über das Eingabegerät 33 einen Parameter eingeben kann, um einen Datentransfer zu filtern.

Die Steuereinheit 5 filtert den Datentransfer zwischen der ersten Kommunikationseinheit 10 und der zweiten Kommunikationseinheit 20 abhängig von einem Parameter, der durch die dritte Kommunikationseinheit 30 empfangen wird.

Durch den Parameter, kann die Steuereinheit 5, wie bereits beschrieben, den Datentransfer so filtern, dass der Datentransfer vollständig unterbrochen oder die Daten teilweise gefiltert werden.

In dem in Figur 2 gezeigten Ausführungsbeispiel ist die Vorrichtung 1 in das Gateway-Steuergerät 40 integriert, so dass eine Filterung des Datentransfers bereits im Gateway-Steuergerät 40 erfolgen kann.

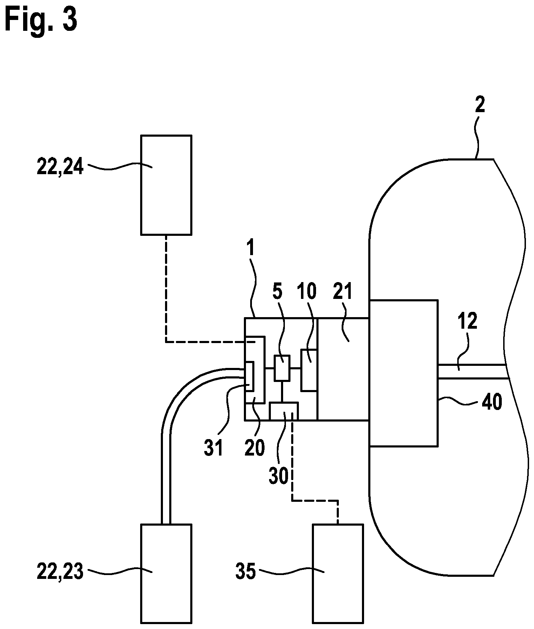

Figur 3 zeigt ein weiteres Ausführungsbeispiel der Erfindung. Hier ist die Vorrichtung 1 nicht in das Gateway-Steuergerät 40 integriert, sondern als eigenständiges Bauteil ausgebildet. Die Vorrichtung 1 lässt sich an eine Schnittstelle 21, beispielsweise die OBD-Buchse, des Fahrzeuges 2 anschließen, so dass ein Nachrüsten von Fahrzeugen 2 mit der Vorrichtung 1 möglich ist. Die in der Figur 3 gezeigte Vorrichtung 1 weist ansonsten die gleichen Merkmale wie in den vorangegangenen Ausführungsbeispielen auf. Eine Kommunikation der Kommunikationseinheit 10 mit dem Bussystem 12 erfolgt über die Schnittstelle 21 und ein Gateway-Steuergerät 40, welches im Datenaustausch mit dem Bussystem 12 steht.

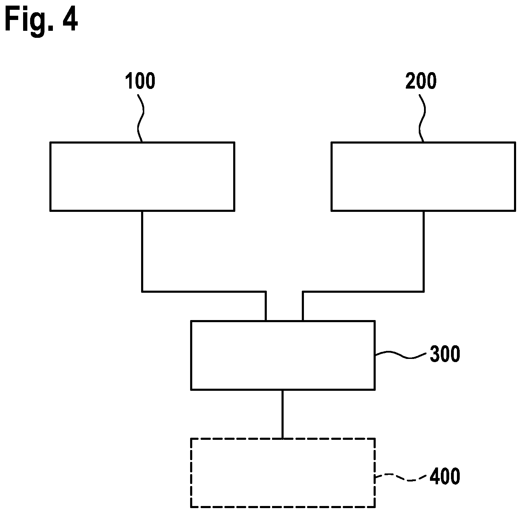

Figur 4 zeigt ein Ablaufdiagramm eines Verfahrens zur Filterung eines Datentransfers. Im Verfahrensschritt 100 werden Daten durch die zweite Kommunikationseinheit 20 von einer externen Recheneinheit 22 empfangen.

Im Verfahrensschritt 200 wird ein Parameter durch die dritte Kommunikationseinheit 30, die von der ersten Kommunikationseinheit 10 und von der zweiten Kommunikationseinheit 20 verschieden ist, empfangen.

Im Verfahrensschritt 300 filtert die Steuereinheit 5 den Datentransfer zwischen der zweiten Kommunikationseinheit 20 und der ersten Kommunikationseinheit 10 abhängig von dem Parameter. Hierbei wird der Datentransfer abhängig vom empfangenen Parameter vollständig unterbrochen oder es können Daten teilweise gefiltert werden.

Im Verfahrensschritt 400 werden die gefilterten Daten von der ersten Empfangseinheit 10 auf das Bussystem 12 des Fahrzeuges gesendet.

Wenn im Rahmen der Erfindung von einem Datentransfer zwischen der ersten Kommunikationseinheit 10 und der zweiten Kommunikationseinheit 20 gesprochen wird, so handelt es sich hierbei sowohl um Daten, die von der zweiten Kommunikationseinheit 20 zur ersten Kommunikationseinheit 10 transportiert werden, sowie um Daten, die von der ersten Kommunikationseinheit 10 zur zweiten Kommunikationseinheit 20 transportiert werden.

## Patentansprüche

1. Vorrichtung (1) zur Filterung von sicherheitsrelevanten Eingriffen, mit einer Steuereinheit (5), sowie einer ersten Kommunikationseinheit (10), welche Daten mit mindestens einem Bussystems (12) eines Fahrzeuges (2) austauschen kann und einer zweiten Kommunikationseinheit (20), welche Daten mit einer externen Recheneinheit (22) austauschen kann, wobei eine dritte Kommunikationseinheit (30) vorgesehen ist, welche von der ersten Kommunikationseinheit (10) und der zweiten Kommunikationseinheit (20) verschieden ist, **dadurch gekennzeichnet, dass** die Steuereinheit (5) den Datentransfers zwischen der ersten Kommunikationseinheit (10) und der zweiten Kommunikationseinheit (20) abhängig von einem durch die dritte Kommunikationseinheit (30) empfangenen Parameter filtert, **dadurch gekennzeichnet, dass** der durch die dritte Kommunikationseinheit (30) empfangene Parameter der Steuereinheit (5) zur Verifizierung dient, ob ein Zugriff auf das Bussystem (12) erlaubt ist bzw. ob sich ein Anwender als berechtigte Person authentifizieren kann.

2. Vorrichtung (1) nach Anspruch 1, wobei der Datentransfer abhängig vom empfangenen Parameter vollständig unterbrochen wird oder Daten teilweise gefiltert werden.

3. Vorrichtung (1) nach Anspruch 1 oder 2, wobei die zweite Kommunikationseinheit (20) für einen kabellosen Datenaustausch, insbesondere über W-LAN, drahtlose Mobilfunktechnologie oder Bluetooth, ausgebildet ist.

4. Vorrichtung (1) nach Anspruch 1, 2 oder 3, wobei die dritte Kommunikationseinheit (30) für einen kabellosen Datenaustausch, insbesondere über W-LAN, drahtlose Mobilfunktechnologie oder Bluetooth, ausgebildet ist.

5. Vorrichtung (1) nach Anspruch 1, 2 oder 3, wobei die dritte Kommunikationseinheit (30) für einen kabelgebundenen Datenaustausch mit einem Eingabegerät (33), welches innerhalb des Fahrzeuges (2) angeordnet ist, ausgebildet ist.

6. Vorrichtung (1) nach einem der Ansprüche 1 bis 4, wobei die Vorrichtung (1) ein eigenständiges Bauteil ist, welches an eine Schnittstelle (21) des Fahrzeuges (2), insbesondere eine OBD-Buchse, anschließbar ist.

7. Gateway-Steuergerät (40), eines fahrzeuginternen Bussystems (12), **dadurch gekennzeichnet, dass** das Gateway-Steuergerät (40) eine Vorrichtung (1) nach einem der Ansprüche 1 bis 5 aufweist.

8. Verfahren zur Filterung von sicherheitsrelevanten Eingriffen, zwischen einer ersten Kommunikationseinheit (10), welche Daten mit mindestens einem Bussystem (12) eines Fahrzeuges (2) austauschen kann und einer zweiten Kommunikationseinheit (20), welche Daten mit einer externen Recheneinheit (22) austauschen kann, **dadurch gekennzeichnet, dass** der Datentransfer zwischen der ersten Kommunikationseinheit (10) und der zweiten Kommunikationseinheit (20) abhängig von einem durch die dritte Kommunikationseinheit (30) empfangenen Parameter gefiltert wird, wobei die dritte Kommunikationseinheit (30) von der ersten Kommunikationseinheit (10) und der zweiten Kommunikationseinheit (20) verschieden ist, **dadurch gekennzeichnet, dass** der durch die dritte Kommunikationseinheit (30) empfangene Parameter der Steuereinheit (5) zur Verifizierung dient, ob ein Zugriff auf das Bussystem (12) erlaubt ist bzw. ob sich ein Anwender als berechtigte Person authentifizieren kann.

9. Verfahren nach Anspruch 8, wobei der Datentransfer abhängig vom empfangenen Parameter vollständig unterbrochen wird oder Daten teilweise gefiltert werden.

## Claims

1. Apparatus (1) for filtering safety-relevant interventions, having a control unit (5) and also a first communication unit (10), which can interchange data with at least one bus system (12) of a vehicle (2), and a second communication unit (20), which can interchange data with an external computing unit (22), wherein provision is made of a third communication unit (30) which differs from the first communication unit (10) and the second communication unit (20), **characterized in that** the control unit (5) filters the data transfer between the first communication unit (10) and the second communication unit (20) on the basis of a parameter received by the third communication unit (30), **characterized in that** the parameter of the control unit (5), which is received by the third communication unit (30), is used to verify whether access to the bus system (12) is allowed or whether a user can be authenticated as an authorized person.

2. Apparatus (1) according to Claim 1, wherein the data transfer is completely interrupted or data are partially filtered on the basis of the received parameter.

3. Apparatus (1) according to Claim 1 or 2, wherein the second communication unit (20) is designed for wireless data interchange, in particular via WLAN, wireless mobile radio technology or Bluetooth.

4. Apparatus (1) according to Claim 1, 2 or 3, wherein the third communication unit (30) is designed for wireless data interchange, in particular via WLAN, wireless mobile radio technology or Bluetooth.

5. Apparatus (1) according to Claim 1, 2 or 3, wherein the third communication unit (30) is designed for wired data interchange with an input device (33) which is arranged inside the vehicle (2).

6. Apparatus (1) according to one of Claims 1 to 4, wherein the apparatus (1) is an independent component which can be connected to an interface (21) of the vehicle (2), in particular an OBD socket.

7. Gateway control device (40) of a bus system (12) inside a vehicle, **characterized in that** the gateway control device (40) has an apparatus (1) according to one of Claims 1 to 5.

8. Method for filtering safety-relevant interventions between a first communication unit (10), which can interchange data with at least one bus system (12) of a vehicle (2), and a second communication unit (20), which can interchange data with an external computing unit (22), **characterized in that** the data transfer between the first communication unit (10) and the second communication unit (20) is filtered on the basis of a parameter received by the third communication unit (30), wherein the third communication unit (30) differs from the first communication unit (10) and the second communication unit (20), **characterized in that** the parameter of the control unit (5), which is received by the third communication unit (30), is used to verify whether access to the bus system (12) is allowed or whether a user can be authenticated as an authorized person.

9. Method according to Claim 8, wherein the data transfer is interrupted or data are partially filtered on the basis of the received parameter.

## Revendications

1. Dispositif (1) permettant de filtrer des interventions relatives à la sécurité, comprenant une unité de commande (5), ainsi qu'une première unité de communication (10) qui peut échanger des données avec au moins un système de bus (12) d'un véhicule (2) et une deuxième unité de communication (20) qui peut échanger des données avec une unité de calcul externe (22), une troisième unité de communication (30) étant prévue qui est différente de la première unité de communication (10) et de la deuxième unité de communication (20),
**caractérisé en ce que** l'unité de commande (5) filtre le transfert de données entre la première unité de communication (10) et la deuxième unité de communication (20) en fonction d'un paramètre reçu par la troisième unité de communication (30),
**caractérisé en ce que** le paramètre reçu par la troisième unité de communication (30) sert à l'unité de commande (5) pour vérifier si un accès au système de bus (12) est permis ou si un utilisateur peut s'authentifier comme une personne autorisée.

2. Dispositif (1) selon la revendication 1, dans lequel, en fonction du paramètre reçu, le transfert de données est complètement interrompu ou des données sont filtrées en partie.

3. Dispositif (1) selon la revendication 1 ou 2, dans lequel la deuxième unité de communication (20) est réalisée pour un échange de données sans câble, en particulier par WLAN, par une technologie de téléphonie mobile sans fil ou par Bluetooth.

4. Dispositif (1) selon la revendication 1, 2 ou 3, dans lequel la troisième unité de communication (30) est réalisée pour un échange de données sans fil, en particulier par WLAN, par une technologie de téléphonie mobile sans fil ou par Bluetooth.

5. Dispositif (1) selon la revendication 1, 2 ou 3, dans lequel la troisième unité de communication (30) est réalisée pour un échange de données câblé avec un périphérique d'entrée (33) qui est disposé à l'intérieur du véhicule (2).

6. Dispositif (1) selon l'une quelconque des revendications 1 à 4, le dispositif (1) étant un composant autonome qui peut être connecté à une interface (21) du véhicule (2), en particulier à une prise OBD.

7. Appareil de commande de passerelle (40) d'un système de bus interne au véhicule (12), **caractérisé en ce que** l'appareil de commande de passerelle (40) présente un dispositif (1) selon l'une quelconque des revendications 1 à 5.

8. Procédé permettant de filtrer des interventions relatives à la sécurité entre une première unité de communication (10) qui peut échanger des données avec au moins un système de bus (12) d'un véhicule (2) et une deuxième unité de communication (20) qui peut échanger des données avec une unité de calcul externe (22),
**caractérisé en ce que** le transfert de données entre la première unité de communication (10) et la deuxième unité de communication (20) est filtré en fonction d'un paramètre reçu par la troisième unité de communication (30), la troisième unité de communication (30) étant différente de la première unité de communication (10) et de la deuxième unité de communication (20),
**caractérisé en ce que** le paramètre reçu par la troisième unité de communication (30) sert à l'unité de commande (5) pour vérifier si un accès au système de bus (12) est permis ou si un utilisateur peut s'authentifier comme une personne autorisée.

9. Procédé selon la revendication 8, dans lequel, en fonction du paramètre reçu, le transfert de données est complètement interrompu ou les données sont filtrées en partie.
